# EUROPÄISCHE PATENTSCHRIFT

(11) **EP 3 321 020 B1**
(45) Veröffentlichungstag und Bekanntmachung des Hinweises auf die Patenterteilung: **29.04.2020**
(21) Anmeldenummer: 16198460.4
(22) Anmeldetag: 11.11.2016
(51) Int. Cl.: B23K 37/08

(54) **VORRICHTUNG ZUR NACHBEARBEITUNG VON STUMPFGESCHWEISSTEN WERKSTÜCKEN, INSBESONDERE SÄGEBÄNDERN ODER BANDMESSERN**
DEVICE FOR THE POST-TREATMENT OF BUTT-WELDED WORKPIECES, IN PARTICULAR SAW BANDS OR BAND KNIVES
DISPOSITIF DE RÉ-USINAGE DE PIÈCES SOUDÉES BORD À BORD, EN PARTICULIER DE SCIES À RUBAN, OU DE COUTEAUX-RUBANS

(43) Veröffentlichungstag der Anmeldung: 16.05.2018
(73) Patentinhaber: Ideal-Werk C. & E. Jungeblodt GmbH & Co.KG, 59557 Lippstadt (DE)
(72) Erfinder: Jungeblodt, Max, Clemens, 59555 Lippstadt (DE)
(74) Vertreter: Graefe, Jörg

(56) Entgegenhaltungen:
- CN-B- 104 148 739
- CN-U- 202 984 764
- CN-U- 204 975 547
- DE-A1- 10 227 574
- DE-A1- 19 523 423
- US-A- 4 082 014
- US-A- 5 662 145

## Beschreibung

Die vorliegende Erfindung betrifft eine Vorrichtung zur Nachbearbeitung einer Schweißnaht eines stumpfgeschweißten Werkstücks, insbesondere eines Sägebands oder eines Bandmessers, mit einer Unterlage zum Auflegen des stumpfgeschweißten Werkstückes, mit einem ersten Schneidantrieb und einer ersten Werkzeugaufnahme, wobei die erste Werkzeugaufnahme mit dem ersten Schneidantrieb gekoppelt ist, so dass die erste Werkzeugaufnahme von dem ersten Schneidantrieb mit einer Drehung um eine erste Achse antreibbar ist.

Eine solche Vorrichtung ist aus CN104148739B bekannt.

Aus dem Stand der Technik sind verschiedene Vorrichtungen bekannt, mit denen eine Nachbearbeitung von Schweißnähten von stumpfgeschweißten Sägebändern oder Bandmessern möglich ist.

Aus dem Dokument US 5 662 145 A ist eine Vorrichtung zur Nachbearbeitung von Schweißnähten mit Schleifwerkzeugen bekannt.

Eine Vorrichtung mit Fräsköpfen ist zum Beispiel aus dem Dokument DE 195 23 423 A1 bekannt. Die Fig. 4 dieses Dokumentes zeigt zwei Schaftfräser, die gleichzeitig beidseitig die Schweißnaht bearbeiten. Die Drehachsen der Fräsköpfe sind um einen Winkel a zu der Unterlage geneigt, auf der sich das Werkstück befindet. In dem Dokument DE 195 23 423 A1 heißt es, dass die zu einem Sockel abgefräste Schweißnaht trapezförmige Flanken erhielten. Das entstehende Fräsbild ist in Fig. 9 des Dokumentes DE 195 23 423 A1 dargestellt.

Die mit der aus dem Dokument DE 195 23 423 A1 bekannten Vorrichtung gefrästen Schweißnähte sind noch nicht plan und liegen nicht in einer Ebene mit dem an den gefrästen Bereich angrenzenden Werkstück. Daher wird die Schweißnaht anschließend noch geschliffen. Nach dem Fräsen ist also ein weiterer Nachbearbeitungsschritt notwendig.

Selbst wenn man aber den Fräskopf mit seiner Drehachse senkrecht zur Unterlage bzw. dem zu bearbeitenden Bereich des Werkstückes ausrichtet, führt dies nicht zu einem in allem zufriedenstellenden Fräsbild, so dass eine Nachbearbeitung notwendig wäre. Bei der Verwendung des Schaftfräsers tritt die Schneide des Fräskopfes seitlich in den zu entfernenden Schweißgrad ein. Da der Schweißgrad auf dem Weg, den die Schneide des Fräskopfes bei einer Umdrehung zurücklegt, nicht gleichförmig ist, arbeitet sich die Schneide bei einer Drehung nicht nur durch unterschiedliche Volumina, sondern auch durch Material mit unterschiedlichen Härten und Eigenschaften (zum Beispiel aufgrund unterschiedlicher Gefügestrukturen). Dadurch kommt es dazu, dass das Fräsbild nicht gleichmäßig ist und einer Nachbearbeitung bedarf. Hier setzt die Erfindung an.

Der Erfindung liegt das Problem zugrunde, eine Vorrichtung der eingangs genannten Art mit Fräswerkzeugen so zu verbessern, dass es in einem Schritt einer Nachbearbeitung möglich ist eine stumpfgeschweißte Schweißnaht mit ausreichender Güte zu erhalten.

Dieses Problem wird erfindungsgemäß durch eine Vorrichtung der eingangs gennannten Art gelöst, bei der die erste Achse in einem Winkel größer als 0° und kleiner oder gleich 70° zu einem Bereich der Unterlage steht. Dieser Bereich kann eben sein.

In einer solchen Vorrichtung wird anstelle eines Schaftfräsers ein Winkelfräskopf , der eine Schneidenverjüngung in Richtung der Stirnseite des Fräskopfes hat, eingesetzt. In der ersten Werkzeugaufnahme ist dann ein erster Winkelfräskopf befestigt, dessen Schneide parallel zu dem ebenen Bereich liegt. Dadurch, dass die Schneide des Winkelfräskopfes parallel zu dem Bereich der Unterlage ist, auf welchem das Werkstück angeordnet ist, ist es schon beim Fräsen möglich, eine Schnittfläche zu erhalten, die in einer Ebenen mit den an die Schweißnaht angrenzenden Bereichen des Werkstücks liegt, was mit der aus dem Dokument DE 195 23 423 A1 bekannten Vorrichtung nicht möglich ist. Der Eintritt der Schneide in den Schweißgrad ist in Längsrichtung der Schweißnaht. Das Material, dass durch die Schneiden abgetragen wird, stützt sich dabei in dem noch abzutragenden Material des Schweißgrades ab, wodurch die Oberfläche deutlich gleichmäßiger wird.

Die erfindungsgemäße Vorrichtung weist vorteilhaft eine zweite Werkzeugaufnahme auf, die mit dem ersten Schneidantrieb oder einem zweiten Schneidantrieb gekoppelt sein kann, so dass die zweite Werkzeugaufnahme von dem ersten oder dem zweiten Schneidantrieb mit einer Drehung um eine zweite Achse antreibbar ist und dass die zweite Achse einem Winkel von größer als 5° und kleiner als 70° zu dem ebenen Bereich der Unterlage steht. In der zweiten Werkzeugaufnahme kann ein zweiter Winkelfräskopf befestigt sein, dessen Schneide parallel zu dem ebenen Bereich liegt. Mit dem in der zweiten Werkzeugaufnahme befestigten zweiten Winkelfräskopf ist es möglich, wenn eine erste Seite des Werkstücks vom ersten Winkelfräskopf bearbeitet wird, eine zweite Seite des Werkstückes mit dem zweiten Winkelfräskopf zu bearbeiten.

Es ist möglich, dass der erste Schneidantrieb und die erste Werkzeugaufnahme auf einer ersten Seite der Unterlage und ggf. der zweite Schneidantrieb und die zweite Werkzeugaufnahme auf einer zweiten Seite der Unterlage angeordnet sind.

Die Unterlage kann ein Loch aufweisen oder geteilt sein und einen Spalt aufweisen, in welches bzw. in welchen der zweite Winkelfräskopf hineinragt. Der zweite Winkelfräskopf kann so an eine auf der Unterlage liegende Seite des Werkstücks heranreichen. Das Loch kann ein Schlitz sein.

Eine erfindungsgemäße Vorrichtung kann einen Vorschubmechanismus aufweisen, mit welchem die erste Werkzeugaufnahme und die zweite Werkzeugaufnahme synchron zueinander in eine Vorschubrichtung verschiebbar sind. Dieser Vorschubmechanismus ist eine Möglichkeit die Bearbeitung beider Seiten des Werkstücks zu synchronisieren. Es sind aber auch andere Lösungen zur Synchronisation möglich, zum Beispiel kann eine Synchronisierung auch durch ein Steuerungsmittel erreicht werden, welches den Vorschub der ersten und der zweiten Werkzeugaufnahme steuert.

Die Vorschubrichtung kann mit der ersten Achse und der zweiten Achse einen rechten Winkel einschließen.

Besonders vorteilhaft ist es, wenn die Vorrichtung einen Vorschubantrieb aufweist, der mit dem Vorschubmechanismus gekoppelt ist, um einen Vorschub zu bewirken.

Gemäß der Erfindung ist es möglich, dass die erste Achse und die zweite Achse parallel zueinander sind oder einen Winkel einschließen, der der Summe des ersten und des zweiten Winkels entspricht. Sind die erste Achse und die zweite Achse parallel zueinander, dann zeigen die Werkzeugaufnahmen bzw. die Winkelfräsköpfe vorteilhaft in entgegengesetzte Richtungen. Außerdem ist es dann vorteilhaft, wenn der erste Winkel und der zweite Winkel den gleichen Betrag haben. Dann ist es möglich, dass der erste Winkelfräskopf und der zweite Winkelfräskopf identisch sind.

Eine erfindungsgemäße Vorrichtung kann Mittel zum Spannen des Werkstückes auf der Unterlage aufweisen. Die Unterlage oder Teile der Unterlage können Teile der Mittel zum Spannen des Werkstückes sein.

Es ist von Vorteil, wenn die Schnittrichtung des ersten Winkelfräskopfes und die Schnittrichtung des zweiten Winkelfräskopfes parallel sind. Dadurch kann vermieden werden, dass Scherkräfte auf das Werkstück einwirken. Außerdem werden senkrecht auf das Werkstück einwirkende Kräfte, die durch die Drehung der Fräsköpfe auf das Werkstück einwirken, ausgeglichen oder nahezu ausgeglichen und müssen nicht oder nur in verringertem Umfang zum Beispiel durch die Mittel zum Spannen des Werkstückes ausgeglichen werden.

Es ist ferner von Vorteil, wenn die erste und die zweite Werkzeugaufnahme und/oder der erste und der zweite Winkelfräskopf auf einer Linie senkrecht zu der Unterlage angeordnet sind.

Eine erfindungsgemäße Vorrichtung kann außerdem eine Anlegeleiste aufweisen, an welcher das Werkstück anlegbar ist, wobei die Anlegeleiste in der Schnittrichtung die Unterlage begrenzt.

Die Werkzeugaufnahmen können mit den Mitteln zum Spannen des Werkstückes, insbesondere mit je einer Spannbacke der Mittel zum Spannen gekoppelt sein, so dass die erste Werkzeugaufnahme eine Spannbewegung oder Lösebewegung einer Spannbacke auf einer ersten Seite eines in die Vorrichtung eingelegten Werkstückes mitausführt und die zweite Werkzeugaufnahme eine Spannbewegung oder Lösebewegung einer Spannbacke auf einer zweiten Seite eines in die Vorrichtung eingelegten Werkstückes mitausführt. Das hat den Vorteil, dass die Werkzeugaufnahmen und die darin eingespannten Fräsköpfe stets in einer richtigen Lage zum Werkstück positioniert sind, selbst wenn das Werkstück Ungänzen oder Dickenabweichungen hat.

Eine erfindungsgemäße Vorrichtung kann zur erfindungsgemäßen Nachbearbeitung einer Schweißnaht eines stumpfgeschweißten Werkstücks, insbesondere eines Sägebands oder eines Bandmessers, genutzt werden. Das Nachbearbeiten umfasst die folgenden Schritte:
- das Einlegen und Spannen des Werkstückes in der Vorrichtung und
- das gleichzeitige Fräsen einer ersten Seite und einer zweiten Seite des Werkstückes.
Beim Nacharbeiten ist es von Vorteil, wenn beim Fräsen eine im Eingriff mit dem Werkstück befindliche Schneide jedes Fräskopfes senkrecht zur Schweißnaht des Werkstückes liegt und die Schnittrichtung jedes Fräskopfes in Richtung der Schweißnaht des Werkstückes liegt.

Weitere Merkmale und Vorteile der vorliegenden Erfindung werden anhand der nachfolgenden Beschreibung eines bevorzugten Ausführungsbeispiels unter Bezugnahme auf die beiliegenden Abbildungen beschrieben. Darin zeigen:
- Fig. 1: eine schematische Darstellung einer ersten erfindungsgemäßen Vorrichtung mit Winkelfräsköpfen in einer Ansicht von vorne,
- Fig. 2: eine schematische Darstellung der ersten erfindungsgemäßen Vorrichtung gemäß Fig. 1 in einer Ansicht von der Seite,
- Fig. 3: eine schematische Darstellung einer zweiten erfindungsgemäßen Vorrichtung mit Winkelfräsköpfen in einer Ansicht von vorne und
- Fig. 4: eine schematische Darstellung der zweiten erfindungsgemäßen Vorrichtung gemäß Fig. 3 in einer Ansicht von der Seite.

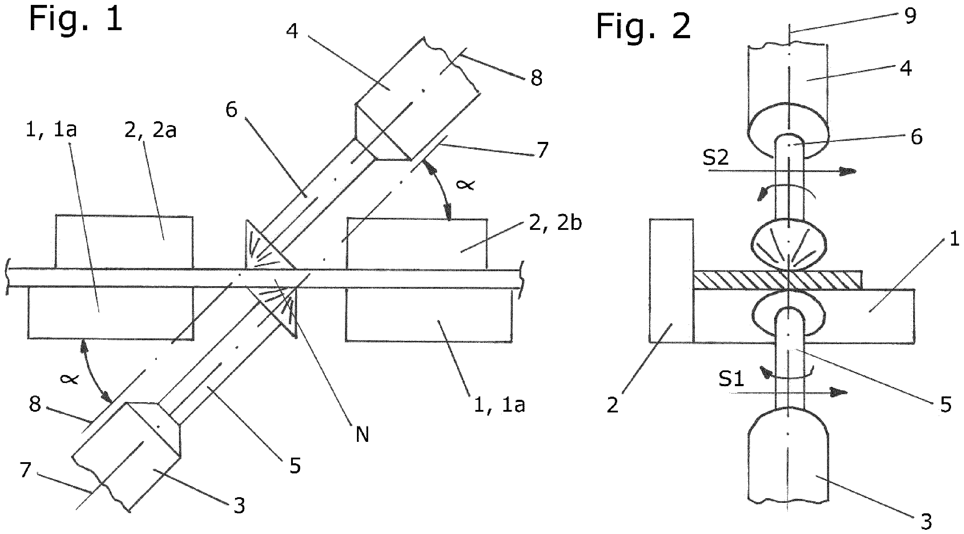

Die in den Figuren 1 und 2 schematisch dargestellte Vorrichtung weist ein zweiteilige Unterlage 1 auf, auf der ein Werkstück, nämlich ein Sägeband B einer Bandsäge aufgelegt ist. Das Sägeband B ist an einer zweiteiligen Anlegeleiste 2 angelegt. Mit einer nicht dargestellten Spannvorrichtung kann das Sägeband B eingespannt werden.

Ein erster Teil 1a und ein zweiter Teil 1b der Unterlage und ein erster Teil 2a und ein zweiter Teil 2b der Anlegeleiste sind durch einen Spalt getrennt. Die Teile 1a, 1b, 2a, 2b liegen in einer Flucht.

Auf der Unterseite der Unterlage 1 ist eine untere Werkzeugaufnahme 3 und auf der Oberseite der Unterlage 1 ist eine obere Werkezugaufnahme 4 vorgesehen. Die Werkzeugaufnahme 3, 4 nehmen jeweils einen Winkelfräskopf 5, 6 auf. Die Winkelfräsköpfe 5, 6 sind identisch.

Die Winkelfräsköpfe 5, 6 verjüngen sich zu ihren freien Enden. Der Winkel unter dem die Schneiden zu einer Drehachse 7, 8 der Werkzeugaufnahmen 3, 4 geneigt sind beträgt 45°. In dem gleichen Winkel a sind die Drehachsen 7, 8 der Werkzeugaufnahmen 3, 4 zur Unterlage 1 geneigt. Die Drehachsen 7, 8 der Werkzeugaufnahmen 3, 4 liegen parallel zu einander und in einer Ebene 9 senkrecht zur Unterlage 1.

Die Winkelfräsköpfe 5, 6 bzw. die Werkzeugaufnahmen 3, 4 sind so positioniert, dass Schneiden der Winkelfräsköpfe 5, 6 Schweißgrate oder anderes aufgrund der Stumpfschweißung des Sägebandes B zu einem geschlossenen Ring an der Schweißnaht über angrenzende Bereiche überstehendes Material abheben können. Eine mit dem Sägeband B in Eingriff stehende Schneide des unteren Winkelfräskopfes 5 liegt dazu in einer Ebene mit der Unterseite der an die Schweißnaht angrenzenden Bereiche des Sägebandes B, während eine mit dem Sägeband B in Eingriff stehende Schneide des oberen Winkelfräskopfes 6 in einer Ebene mit der Oberseite der an die Schweißnaht angrenzenden Bereiche des Sägebandes B liegt.

Die Winkelfräsköpfe 5, 6 bzw. die Werkzeugaufnahmen 3, 4 sind so positioniert, dass die Ebene 9 so ausgerichtet ist, dass mit dem Sägeband B in Eingriff stehenden Schneiden der Winkelfräsköpfe 5, 6 senkrecht zur Schweißnaht stehen.

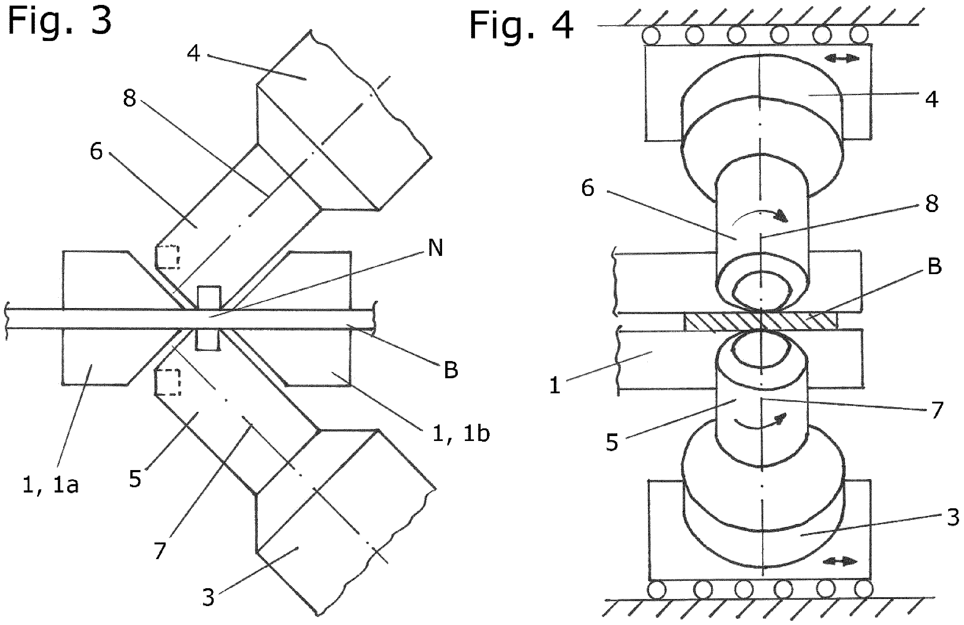

Die in den Figuren 3 und 4 schematisch dargestellte Vorrichtung weist viele gemeinsame Merkmale mit der Vorrichtung gemäß der Figuren 1 und 2 auf. Gleiche oder funktional gleiche Komponenten der Vorrichtungen sind mit gleichen Bezugszeichen gekennzeichnet.

Die beiden Vorrichtungen unterscheiden sich im Wesentlichen durch die Anordnung und Ausrichtung der Werkzeugaufnahmen 3, 4. Bei der Vorrichtung gemäß der Figuren 3 und 4 sind die Werkzeugaufnahmen 3, 4 so ausgerichtet, dass die Drehachse 7, 8 der Werkzeugaufnahmen 3, 4 in einem Winkel von 45° zu der Unterlage 1 liegen und senkrecht aufeinander stehen. In den Werkzeugaufnahmen 3, 4 sind Winkelfräsköpfe 5, 6 befestigt, die Wendeschneidplatten aufweisen, deren Schneiden um 45° zu den Drehachsen 7, 8 geneigt sind und dadurch parallel zu der Unterlage 1 liegen. Die Unterlagen werden durch untere Spannbacken 1a von Spannmitteln gebildet, die auch obere Spannbacken aufweisen, die mit den unteren Spannbacken zum Einspannen des Sägebandes B zusammenwirken.

Mittels der erfindungsgemäßen Vorrichtungen ist es möglich die Ober- und Unterseite des nachzubearbeitenden Sägebandes B gleichzeitig so zu bearbeiten, dass ein an der Schweißnaht überstehendes Material auf die Ebene der Bereiche des an die Schweißnaht angrenzenden Sägebandes abgetragen wird. Die durch das Fräsen der Oberseite und der Unterseite des Sägebandes entstandenen Flächen haben eine Güte, die die Notwendigkeit einer weiteren Nachbearbeitung durch Schleifen zumindest herabsetzt oder bestenfalls sogar überflüssig werden lässt.

## Patentansprüche

1. Vorrichtung zur Nachbearbeitung einer Schweißnaht (N) eines stumpfgeschweißten Werkstücks, insbesondere eines Sägebands (B) oder eines Bandmessers, mit einer Unterlage (1, 1a, 1b) zum Auflegen des stumpfgeschweißten Werkstückes (B), mit einem ersten Schneidantrieb und einer ersten Werkzeugaufnahme (4), wobei die erste Werkzeugaufnahme (4) mit dem ersten Schneidantrieb gekoppelt ist, so dass die erste Werkzeugaufnahme (4) von dem ersten Schneidantrieb mit einer Drehung um eine erste Achse (8) antreibbar ist,
**dadurch gekennzeichnet,**
**dass** die erste Achse (8) in einem Winkel größer 0° und kleiner oder gleich 70° zu einem Bereich der Unterlage (1, 1a, 1b) steht und
**dass** in der ersten Werkzeugaufnahme (4) ein erster Winkelfräskopf (6) befestigt ist, dessen Schneide parallel zu dem Bereich der Unterlage liegt.

2. Vorrichtung nach Anspruch 1, **dadurch gekennzeichnet, dass** die Vorrichtung eine zweite Werkzeugaufnahme (3) aufweist, dass die zweite Werkzeugaufnahme (3) mit dem ersten Schneidantrieb oder einem zweiten Schneidantrieb gekoppelt ist, so dass die zweite Werkzeugaufnahme (3) von dem ersten oder dem zweiten Schneidantrieb mit einer Drehung um eine zweite Achse (7) antreibbar ist und dass die zweite Achse (7) einem Winkel zwischen 0° und 70° zu dem ebenen Bereich der Unterlage (1, 1a, 1b) steht.

3. Vorrichtung nach Anspruch 2, **dadurch gekennzeichnet, dass** in der zweiten Werkzeugaufnahme (3) ein zweiter Winkelfräskopf (5) befestigt ist, dessen Schneide parallel zu dem ebenen Bereich liegt.

4. Vorrichtung nach Anspruch 2 oder 3, **dadurch gekennzeichnet, dass** der erste Schneidantrieb und die erste Werkzeugaufnahme (4) auf einer ersten Seite der Unterlage (1, 1a, 1b) und ggf der zweite Schneidantrieb und die zweite Werkzeugaufnahme (3) auf einer zweiten Seite der Unterlage (1, 1a, 1b) angeordnet sind.

5. Vorrichtung nach Anspruch 4, **dadurch gekennzeichnet, dass** die Unterlage (1, 1a, 1b) ein Loch aufweist, in welches der zweite Winkelfräskopf (5) hineinragt.

6. Vorrichtung nach einem der Ansprüche 1 bis 5, **dadurch gekennzeichnet, dass** die Vorrichtung einen Vorschubmechanismus aufweist, mit welchem die erste Werkzeugaufnahme und die zweite Werkzeugaufnahme synchron zueinander in eine Vorschubrichtung verschiebbar sind.

7. Vorrichtung nach Anspruch 6, **dadurch gekennzeichnet, dass** die Vorschubrichtung mit der ersten Achse (8) und der zweiten Achse (7) einen rechten Winkel einschließt.

8. Vorrichtung nach Anspruch 6 oder 7, **dadurch gekennzeichnet, dass** die Vorrichtung einen Vorschubantrieb aufweist, der mit dem Vorschubmechanismus gekoppelt ist, um einen Vorschub zu bewirken.

9. Vorrichtung nach einem der Ansprüche 2 bis 8, **dadurch gekennzeichnet, dass** die erste Achse (8) und die zweite Achse (7) parallel zueinander sind oder einen Winkel einschließen, der der Summe des ersten und des zweiten Winkels entspricht.

10. Vorrichtung nach einem der Ansprüche 3 bis 9, **dadurch gekennzeichnet, dass** die Schnittrichtung (S2) des ersten Winkelfräskopfes (6) und die Schnittrichtung (S1) des zweiten Winkelfräskopfes (5) parallel sind.

11. Vorrichtung nach einem der Ansprüche 1 bis 10, **dadurch gekennzeichnet, dass** die Vorrichtung Mittel zum Spannen des Werkstückes (B) auf der Unterlage (1, 1a, 1b) aufweist.

12. Vorrichtung nach einem der Ansprüche 1 bis 11, **dadurch gekennzeichnet, dass** die Vorrichtung eine Anlegeleiste (2, 2a, 2b) aufweist, an welchen das Werkstück (B) anlegbar ist, wobei die Anlegeleiste (2, 2a, 2b) in der Schnittrichtung (S1, S2) die Unterlage (1, 1a, 1b) begrenzt.

13. Verfahren zur Nachbearbeitung einer Schweißnaht (N) eines stumpfgeschweißten Werkstücks (B), insbesondere eines Sägebands oder eines Bandmessers, mit einer Vorrichtung nach einem der Ansprüche 1 bis 12,
**gekennzeichnet durch**
das Einlegen und Spannen des Werkstückes (B) in der Vorrichtung und
das gleichzeitige Fräsen einer ersten Seite und einer zweiten Seite des Werkstückes (B).

14. Verfahren nach Anspruch 13, **dadurch gekennzeichnet, dass** beim Fräsen eine im Eingriff mit dem Werkstück (B) befindliche Schneide jedes Fräskopfes senkrecht zur Schweißnaht (N) des Werkstückes (B) liegt und die Schnittrichtung (S1, S2) jedes Fräskopfes in Richtung der Schweißnaht (N) des Werkstückes (B) liegt.

## Claims

1. Device for post-treatment of a welding seam (N) of a butt-welded workpiece, in particular a saw band (B) or a bandknife, having a base (1, 1a, 1b) for applying the butt-welded workpiece (B), having a first cutting drive and a first tool holder (4), wherein the first tool holder (4) is coupled to the first cutting drive, so that the first tool holder (4) can be driven by the first cutting drive with a rotation about a first axis (8),
**characterised in that**
the first axis (8) is at an angle greater than 0° and less than or equal to 70° to a region of the base (1, 1a, 1b) and
a first angled milling head (6) is fastened in the first tool holder (4), the cutting edge of which lies parallel to the region of the base.

2. Device according to claim 1, **characterised in that** the device has a second tool holder (3), **in that** the second tool holder (3) is coupled to the first cutting drive or a second cutting drive, so that the second tool holder (3) can be driven by the first or the second cutting drive with a rotation about a second axis (7) and that the second axis (7) is at an angle between 0° and 70° to the flat region of the base (1, 1a, 1b).

3. Device according to claim 2, **characterised in that** a second angled milling head (5) is fastened in the second tool holder (3), the cutting edge of which lies parallel to the flat region.

4. Device according to claim 2 or 3, **characterised in that** the first cutting drive and the first tool holder (4) are arranged on a first side of the base (1, 1a, 1b) and if applicable the second cutting drive and the second tool holder (3) are arranged on a second side of the base (1, 1a, 1b).

5. Device according to claim 4, **characterised in that** the base (1, 1a, 1b) has a hole into which the second angled milling head (5) protrudes.

6. Device according to any one of claims 1 to 5, **characterised in that** the device has a feed mechanism with which the first tool holder and the second tool holder can be moved synchronously to one another in a feed direction.

7. Device according to claim 6, **characterised in that** the feed direction forms a right angle with the first axis (8) and the second axis (7).

8. Device according to claim 6 or 7, **characterised in that** the device has a feed drive which is coupled to the feed mechanism to effect a feed.

9. Device according to any one of claims 2 to 8, **characterised in that** the first axis (8) and the second axis (7) are parallel to one another or form an angle which corresponds to the sum of the first and the second angle.

10. Device according to any one of claims 3 to 9, **characterised in that** the cutting direction (S2) of the first angled milling head (6) and the cutting direction (S1) of the second angled milling head (5) are parallel.

11. Device according to any one of claims 1 to 10, **characterised in that** the device has means for clamping the workpiece (B) on the base (1, 1a, 1b).

12. Device according to any one of claims 1 to 11, **characterised in that** the device has a contact strip (2, 2a, 2b) on which the workpiece (B) can be placed, wherein the contact strip (2, 2a, 2b) restricts the base (1, 1a, 1b) in the cutting direction (S1, S2).

13. Method for post-treatment of a welding seam (N) of a butt-welded workpiece (B), in particular a saw band or a bandknife, with a device according to any one of the claims 1 to 12,
**characterised by**
inserting and clamping the workpiece (B) in the device and
simultaneously milling a first side and a second side of the workpiece (B).

14. Method according to claim 13, **characterised in that** during milling, a cutting edge of each milling head, said cutting edge being in engagement with the workpiece (B), is perpendicular to the welding seam (N) of the workpiece (B), and the cutting direction (S1, S2) of each milling head is in the direction of the welding seam (N) of the workpiece (B).

## Revendications

1. Dispositif pour réusiner un cordon de soudure (N) d'une pièce soudée bout à bout, en particulier une scie à ruban (B) ou un couteau-ruban, avec une base (1, 1a, 1b) pour placer la pièce soudée bout à bout (B), avec un premier entraînement de coupe et un premier logement d'outil (4), le premier logement d'outil (4) étant couplé au premier entraînement de coupe, de sorte que le premier logement d'outil (4) peut être entraîné par le premier entraînement de coupe avec une rotation autour d'un premier axe (8),
**caractérisé en ce que**
le premier axe (8) présente un angle supérieur à 0° et inférieur ou égal à 70° par rapport à une zone de la base (1, 1a, 1b) et
une première tête de fraisage angulaire (6) est fixée dans le premier logement d'outil (4), dont l'arête de coupe est parallèle à la zone de la base.

2. Dispositif selon la revendication 1, **caractérisé en ce que** le dispositif présente un deuxième logement d'outil (3), que le deuxième logement d'outil (3) est couplé au premier entraînement de coupe ou à un deuxième entraînement de coupe, de sorte que le deuxième logement d'outil (3) du premier ou du deuxième entraînement de coupe peut être entraîné avec une rotation autour d'un deuxième axe (7) et que le deuxième axe (7) présente un angle compris entre 0° et 70° par rapport à la zone plate de la base (1, 1a, 1b).

3. Dispositif selon la revendication 2, **caractérisé en ce qu'**une deuxième tête de fraisage angulaire (5) est fixée dans le deuxième logement d'outil (3), dont l'arête de coupe est parallèle à la zone plate.

4. Dispositif selon la revendication 2 ou 3, **caractérisé en ce que** le premier entraînement de coupe et le premier logement d'outil (4) sont disposés sur un premier côté de la base (1, 1a, 1b) et le cas échéant le deuxième entraînement de coupe et le deuxième logement d'outil (3) sont disposés sur un deuxième côté de la base (1, 1a, 1b).

5. Dispositif selon la revendication 4, **caractérisé en ce que** la base (1, 1a, 1b) présente un trou dans lequel la deuxième tête de fraisage angulaire (5) fait saillie.

6. Dispositif selon l'une quelconque des revendications 1 à 5, **caractérisé en ce que** le dispositif présente un mécanisme d'avance avec lequel le premier logement d'outil et le deuxième logement d'outil peuvent être déplacés de manière synchrone l'un à l'autre dans une direction d'avance.

7. Dispositif selon la revendication 6, **caractérisé en ce que** la direction d'avance renferme un angle droit avec le premier axe (8) et le deuxième axe (7).

8. Dispositif selon la revendication 6 ou 7, **caractérisé en ce que** le dispositif a un entraînement d'avance qui est couplé au mécanisme d'avance pour effectuer une avance.

9. Dispositif selon l'une quelconque des revendications 2 à 8, **caractérisé en ce que** le premier axe (8) et le deuxième axe (7) sont parallèles l'un à l'autre ou renferment un angle qui correspond à la somme du premier et du deuxième angle.

10. Dispositif selon l'une quelconque des revendications 3 à 9, **caractérisé en ce que** la direction de coupe (S2) de la première tête de fraisage angulaire (6) et la direction de coupe (S1) de la deuxième tête de fraisage angulaire (5) sont parallèles.

11. Dispositif selon l'une quelconque des revendications 1 à 10, **caractérisé en ce que** le dispositif présente des moyens de serrage de la pièce (B) sur la base (1, 1a, 1b).

12. Dispositif selon l'une quelconque des revendications 1 à 11, **caractérisé en ce que** le dispositif présente une règle de contact (2, 2a, 2b) sur laquelle la pièce (B) peut être appliquée, la règle de contact (2, 2a, 2b) limitant la base (1, 1a, 1b) dans la direction de coupe (S1, S2).

13. Procédé pour réusiner un cordon de soudure (N) d'une pièce soudée bout à bout(B), en particulier une scie à ruban ou un couteau-ruban, avec un dispositif selon l'une quelconque des revendications 1 à 12,
**caractérisé par** :
l'insertion et le serrage de la pièce (B) dans le dispositif et
le fraisage simultané d'un premier côté et d'un deuxième côté de la pièce (B).

14. Procédé selon la revendication 13, **caractérisé en ce que**
lors du fraisage, une arête de coupe de chaque tête de fraisage qui est en prise avec la pièce (B) est perpendiculaire au cordon de soudure (N) de la pièce (B) et la direction de coupe (S1, S2) de chaque tête de fraisage est dans le sens du cordon de soudure (N) de la pièce (B).
